(19)

Europäisches Patentamt

European Patent Office

Office européen des brevets

(11)  **EP 2 026 246 A1**

(12)  # EUROPEAN PATENT APPLICATION

(43) Date of publication:
**18.02.2009  Bulletin 2009/08**

(51) Int Cl.:
*G06K 9/00* (2006.01)        *G06K 9/42* (2006.01)

(21) Application number: **07015282.2**

(22) Date of filing: **03.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Harman Becker Automotive Systems GmbH**
**76307 Karlsbad (DE)**

(72) Inventors:
• **Stephan, Martin**
  **76337 Waldbronn (DE)**

• **Bergmann, Stephan**
  **76464 Muggensturm (DE)**

(74) Representative: **Bertsch, Florian Oliver et al**
  **Kraus & Weisert**
  **Patent- und Rechtsanwälte**
  **Thomas-Wimmer-Ring 15**
  **80539 München (DE)**

Remarks:
Amended claims in accordance with Rule 137(2) EPC.

(54)  **Method and apparatus for evaluating an image**

(57)      A method and apparatus for evaluating an image are provided. The apparatus comprises a processing device (3) having an input (4) to receive image data representing the image and a further input (5) to receive distance information on a distance of an object relative to an image plane of the image. The distance information may be determined based on a three-dimensional image including depth information captured utilizing a 3D camera device (7). The processing device (3) is configured to resample at least a portion of the image data based both on the distance information and on a pre-determined reference distance to generate resampled image data, the portion of the image data to be resampled representing at least part of the object.

FIG. 1

EP 2 026 246 A1

Printed by Jouve, 75001 PARIS (FR)

**Description**

Background of the invention

This invention relates to a method and apparatus for evaluating an image. In particular, this invention relates to a method and apparatus for evaluating an image, which may be employed for object recognition in various environments, such as in a driver assistance system onboard a vehicle or in a surveillance system.

Related Art

Nowadays, vehicles provide a plurality of driver assistance functions in order to assist the driver in controlling the vehicle and/or to enhance driving safety. Examples for such driver assistance functions include parking aids, collision prediction functions and safety features including airbags or seat belt retractors that may be actuated according to a control logics. Some of these driver assistance functions may rely on, or at least harness, information on surroundings of the vehicle in the form of image data that is automatically evaluated, in order to, e.g., detect approaching obstacles. In some driver assistance functions, not only the presence of an object in proximity to the vehicle, but also its "type" or "class", such as vehicle or pedestrian, may be automatically determined to take appropriate action based on the determined object class. This may be achieved by capturing an image having a field of view that corresponds to a portion of the vehicle surroundings and evaluating the image data representing the image to detect objects and to determine their respective object class, based on, e.g., characteristic geometrical features and sizes of objects represented by the image data, which may be compared to reference data. Such a conventional approach to image evaluation frequently has shortcomings associated with it. For example, when the image data is directly compared to reference data, the reliability of object classification may depend on the distance of the object relative to the vehicle in which the driver assistance function is installed. For example, a lorry at a large distance from the vehicle may be incorrectly identified as a car at a shorter distance from the vehicle, or vice versa, due to the larger lateral dimensions of the lorry.
Similar problems exist in other situations in which an automatic identification of objects in an image is desirable, such as surveillance camera systems installed in public areas or private property.

Summary

Therefore, there exists a need in the art for an improved method and apparatus for evaluating an image. In particular, there is a need for an improved method and apparatus for evaluating an image, which provides results that are less prone to errors caused by a variation in distance of an object relative to a camera that captures the image to be evaluated.
According to the present invention, this need is addressed by a method and apparatus as defined by the independent claims. The dependent claims define preferred or advantageous embodiments.
According to an aspect of the invention, a method of evaluating an image is provided, which comprises the steps of retrieving image data representing the image, retrieving distance information on a distance of an object relative to an image plane of the image, at least part of the object being represented by the image data, and resampling at least a portion of the image data based both on the distance information and on a pre-determined reference distance to generate resampled image data, wherein the portion of the image data to be resampled represents at least part of the object. As used herein, the term "image plane" refers to the (usually virtual) plane onto which the image to be evaluated is mapped by the optical system that captures the image. According to this method, a portion of the image data representing the object of interest is resampled based on both the distance of the object relative to the image plane and the pre-determined reference distance. Therefore, a subsequent analysis of the resampled image data is less likely to be affected by the distance of the object relative to the image plane, because the method allows distance-related effects to be at least partially taken into account by resampling the portion of the image data.
In one embodiment, a resampling factor, by which the portion of the image data is resampled, may be determined based on a comparison of the distance of the object and the reference distance. For example, the portion of the image data may be upsampled when the distance of the object exceeds a pre-determined threshold, which is larger than or equal to the reference distance, and/or the portion of the image data may be downsampled when the distance of the object is less than a further pre-determined threshold, which is less than or equal to the reference distance. The pre-determined threshold and the further pre-determined threshold may be selected to be both approximately equal to the reference distance. For example, in one exemplary embodiment, when the distance of the object is less than the reference distance, the portion of the image data may be downsampled by a downsampling factor that is approximately equal to the reference distance divided by the distance of the object, and when the distance of the object is greater than the reference distance, the portion of the image data may be upsampled by an upsampling factor that is approximately equal to the distance of the object divided by the reference distance. By selecting the resampling factor based on a comparison of the distance of the object and the reference distance, the portion of the image data representing the object may be increased or decreased in size to at least partially accommodate size-variations of the object image as a function of object distance. For example, the portion of the image data may be resampled such that a pixel of the resampled image data corresponds to an object width that is approximately equal to a width per pixel in the image data of an object located at the reference distance from the image plane, so that the object image is rescaled to have approximately the size that it would have when the object would have been imaged at the reference distance.

The method may further comprise the step of obtaining further image data representing a three-dimensional image and comprising depth information, a field of view of the three-dimensional image overlapping with a field of view of the image. By utilizing the further image data representing a three-dimensional image, the portion of the image data representing the object may be conveniently identified, and the distance of the object relative to the image plane may also be determined from the further image data. In this manner, the image may be evaluated by using both the image data and the further image data, i.e., by combining the information of a two-dimensional (2D) image and a three-dimensional (3D) image. As used herein, the term "depth information" refers to information on distances of objects located along a plurality of viewing directions represented by pixels of the three-dimensional image.

The method may comprise identifying a portion of the further image data, which represents at least part of the object, based on the depth information. For example, a number of pixels of the further image data that correspond to approximately equal or at least similar depth values may be assigned to the portion of the further image data that represents at least part of the object. In one embodiment, a plurality of objects may be identified in this manner in the further image data to create an object list that includes position and depth information for the various objects. Additional logical functions may be employed to identify objects in the further image data, e.g., by evaluating the shape and/or symmetry of the pixels having comparable depth values. For example, only structures of pixels in the further image data that have a square or trapezoidal shape may be selected for further processing if vehicles are to be identified in the image data. In this manner, evaluating the image data may be restricted to the relevant portions of the image data, thereby enhancing processing speeds.

The portion of the further image data may be utilized in selecting the portion of the image data that is to be resampled. I.e., the portion of the image data that is to be resampled may be selected based on the objects identified in the further image data. This may include identifying pixels of the image data that correspond to a pixel of the further image data comprised by the portion of the further image data that represents part of the object, i.e., by performing a mapping of pixels from the further image data to the image data.

The three-dimensional image may be captured utilizing techniques based on propagation times of light pulses, e.g., utilizing a PMD (Photonic Mixer Device) camera. The three-dimensional image may also be captured utilizing a stereo camera. The image may be captured utilizing a 2D camera, e.g., a CMOS or CCD camera.

The resampled image data may be further analyzed, e.g., to classify the object. As used herein, the term "classification" of an object is used to refer to a process in which it is determined whether the object belongs to one of a number of given object types or classes, such as cars, lorries, motorcycles, traffic signs and/or pedestrians. The method may comprise the steps of retrieving reference data on a plurality of reference objects representing a plurality of object types, and analyzing the resampled image data based on the reference data to classify the object. The reference data may have various forms, and the analyzing may correspondingly be implemented in various ways. For example, a so-called learning algorithm may be employed to analyze the resampled image data, which is trained on a number of valid or good objects of a given object type to subsequently identify objects of this object type. In this case, the reference data may comprise parameters for analyzing the resampled image data obtained by training the learning algorithm. The reference data may also comprise information on characteristic shapes and/or colors for a specific object type, and the resampled image data are analyzed by identifying such characteristic shapes and/or colors to match the object to an object type. The reference data may also comprise image data for one or several objects of a given object type, e.g., image data representing several different cars or several different lorries, and the resampled image data may be compared to this reference data to match the object to an object type.

Irrespective of the specific implementation of the analyzing step, the reference data may be generated based on an image of at least one of the reference objects located at a distance from the image plane that is approximately equal to the reference distance. The analyzing step is then well adapted to classify the object based on the resampled image data, which has been obtained by a distance-dependent resampling.

The method may be employed for classifying several objects represented by the image data. For example, an object list including a plurality of objects and their respective distances may be generated based on the further image data representing the three-dimensional image, and the steps of retrieving distance information, resampling and analyzing may be respectively performed for each of the plurality of objects.

A result of the analyzing step may be output to a driver assistance system. For example, information on the object type of an approaching object, such as pedestrian, car or lorry, may be output to a driver assistance system that actuates a safety device and/or outputs a warning signal based on the information on the object type.

According to another aspect of the present invention, a data storage medium is provided which has stored thereon instructions which, when executed by a processor of an electronic computing device, direct the computing device to perform the method according to any one embodiment of the invention. The electronic computing device may be configured as a universal processor that has inputs for receiving the image data and the further image data. The electronic computing device may also comprise a processor, a CMOS or CCD camera and a PMD camera, the processor retrieving the image data from the CMOS or CCD camera and the further image data from the PMD camera.

According to another aspect of the present invention, an apparatus for evaluating an image is provided, which comprises a processing device having an input to receive image data representing the image and a further input to receive distance information on a distance of an object relative to an image plane of the image, at least part of the object being represented by the image. The processing device is configured to resample at least a portion of the image data based both on the distance information and on a pre-determined reference distance to generate resampled image data, the portion of the image data to be resampled representing at least part of the object. By resampling a portion of the image data representing the object of interest based on both the distance of the object relative to the image plane and the pre-determined reference distance, in this apparatus, distance-related effects may at least partially be taken into account before analyzing the resampled image data, e.g., object classification.

The apparatus may comprise a 3D camera device coupled to the further input, which is configured to capture further image data representing a three-dimensional image and comprising depth information, a field of view of the three-dimensional image overlapping with a field of view of the image. The 3D camera device may comprise a PMD (Photonic Mixer Device) camera or a stereo camera. The 3D camera device may further comprise an object identification device that is configured to identify objects and their respective distances based on the further image data. The object identification device may further be configured to determine the distance information based on the further image data and to provide the distance information to the processing device. With a 3D camera device having this configuration, the presence of objects and their respective distances relative to an image plane may be identified based on the further image data. For example, the 3D camera device may provide an object list including information on positions and distances of objects to the processing device.

The 3D camera device may be configured to provide information on a portion of the further image data representing at least part of the object to the processing device, which in turn may be configured to select the portion of the image data based on the information on the portion of the further image data. In this manner, the portion of the image data that is to be resampled may be selected based on information on a position of the object obtained from the further image data.

The apparatus may further comprise a 2D camera coupled to the input of the processing device and configured to capture the image. The 2D camera may comprise a CCD camera or a CMOS camera.

The processing device may be configured to resample the portion of the image data by a resampling factor determined based on a comparison of the distance of the object and the reference distance. Based on the comparison of the distance of the object and the reference distance, the resampling may include an upsampling or a downsampling. In particular, the processing device may be configured to resample the portion of the image data such that a pixel of the resampled image data corresponds to an object width that is approximately equal to a width per pixel in the image data of an object located at the reference distance from the image plane. In this manner, the representation of the object in the image may be rescaled so as to facilitate a further evaluation of the image

The apparatus may also comprise a storage device having stored thereon reference data on a plurality of reference objects representing a plurality of object types. The processing device may then be coupled to the storage device to retrieve the reference data and may be configured to analyze the resampled image data based on the reference data to classify the object into one of the plurality of object types. The reference data may be generated based on an image of at least one of the reference objects at a distance from the image plane that is approximately equal to the reference distance. Since the portion of the image data is resampled based on both the distance of the object and the reference distance, by analyzing the resampled image data utilizing the reference data, effects induced by distance-dependent variations in the imaged object may be reduced.

The apparatus may be comprised by a driver assistance system. The driver assistance system may further comprise an output unit for providing at least one of optical, acoustical or tactile output signals based on a result of an image evaluation performed by the apparatus. The driver assistance system may, e.g., output a warning signal based on the result of the image evaluation. Additionally or alternatively, the driver assistance system may comprise an occupant and/or pedestrian protection system coupled to the apparatus and configured to be actuated based on a result of an image evaluation performed by the apparatus. For example, the protection system may comprise a passenger airbag which is activated when a collision with a vehicle is predicted to occur based on the result of the image evaluation, and a pedestrian airbag which is activated when a collision with a pedestrian is predicted to occur.

It is anticipated that one of the fields of application of the present invention will be in driver assistance systems onboard vehicles. However, the various embodiments of the present invention are not limited to this particular application and may find application in a wide variety of fields, such as evaluating images captured in security-related applications, e.g., the surveillance of public areas.

Brief Description of the Drawings

Additional features and advantages of the present invention will become more readily appreciated from the following detailed description of preferred or advantageous embodiments with reference to the accompanying drawings, wherein:

Fig. 1 shows a schematic block diagram of a driver assistance system which includes an apparatus for evaluating an image according to an embodiment of the invention.

Fig. 2 is a flow diagram representation of a method according to an embodiment of the invention.

Fig. 3 is a flow diagram representation of a method according to another embodiment of the invention.

Fig. 4(a) is a schematic representation of a 2D image, and Fig. 4(b) schematically illustrates a resampling of portions of the image of Fig. 4(a).

Fig. 5 is a schematic top view showing a road segment, with reference to which the methods according to embodiments of the invention will be explained.

Fig. 6 schematically shows a 2D image of the road segment of Fig. 5.

Fig. 7 schematically shows a 3D image of the road segment of Fig. 5.

Fig. 8 schematically shows resampled portions of the 2D image of Fig. 6.

Fig. 9 is a flow diagram representation of a method according to another embodiment of the invention.

Fig. 10 shows a schematic block diagram of a driver assistance system which includes an apparatus for evaluating an image according to another embodiment of the invention.

Fig. 11 is a flow diagram representation of a method according to another embodiment of the invention.

Detailed Description of Embodiments

Hereinafter, exemplary embodiments of the invention will be explained with reference to the drawings. It is to be understood that the following description is given only for the purpose of better explaining the present invention and is not to be taken in a limiting sense. It is also to be understood that, unless specifically noted otherwise, the features of the various embodiments described below may be combined with each other.

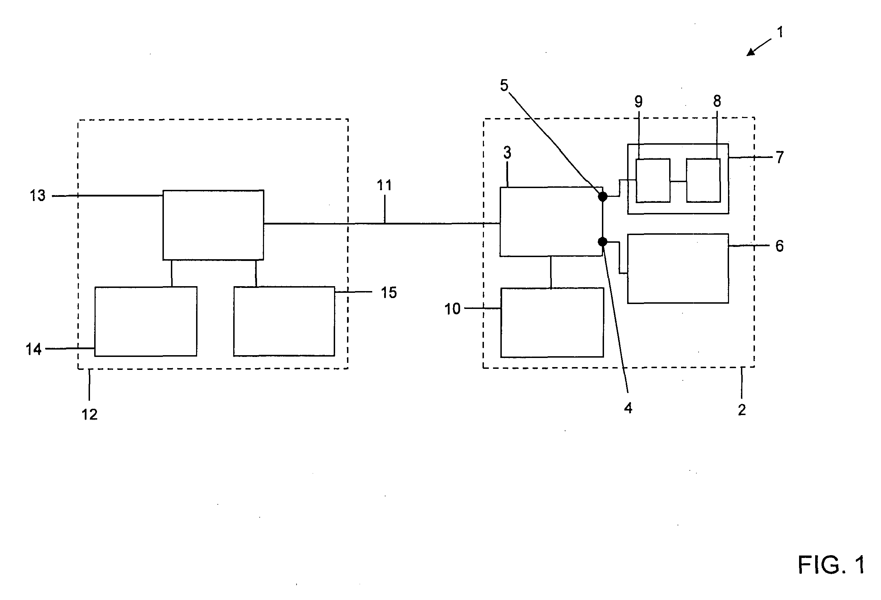

Fig. 1 is a schematic block diagram representation of a driver assistance system 1 which includes an apparatus 2 for evaluating an image according to an embodiment and an assistance device 12. The apparatus 2 includes a processing device 3, which has an input 4 to receive image data representing the image to be evaluated and a further input 5 to receive distance information on a distance of an object relative to an image plane. The processing device 3 is further coupled to a storage device 10 that has stored thereon reference data for object classification.

The input 4 of the processing device 3 is coupled to a 2D camera 6 that captures the image and provides the image data representing the image to the processing device 3. The 2D camera 6 may be configured, e.g., as a CMOS or CCD camera and may include additional circuitry to process the image data prior to outputting thereof to the processing device 3. For example, the image data may be filtered or suitably encoded before being output to the processing device 3.

The further input 5 of the processing device 3 is coupled to a 3D camera device 7 which includes a 3D camera 8 and an object identification device 9 coupled to the 3D camera 8. The 3D camera 8 captures further image data representing a three-dimensional image including depth information for a plurality of viewing directions, i.e., information on a distance of a closest obstacle located along a line of sight in one of the plurality of viewing directions. The object identification device 9 receives the further image data representing the three-dimensional image from the 3D camera 8 and determines the lateral positions of objects within the field of view of the 3D camera 8 and their respective distances based on the depth information. The object identification device 9 may be configured to perform a segmentation algorithm, in which adjacent pixels that have comparable distances from the 3D camera are assigned to belong to one object. Additional logical functions may be incorporated into the object identification device 9. For example, if only vehicles are to be identified in the image data, only regions of pixels in the further image data that have shapes similar to a rectangular or trapezoidal shape may be identified, so that objects that do not have a shape that is typically found for a vehicle are not taken into account when evaluating the image data. The object identification device 9 may identify the lateral positions of all objects of interest in the further image data, i.e., the coordinates of regions in which the objects are located, and may determine a distance of the respective objects relative to the 3D camera 8. This data, also referred to as "object list" in the following, is then provided to the processing device 3.

The 2D camera 6 and the 3D camera 8 of the 3D camera device 7 are arranged and configured such that a field of view of the 2D camera 6 overlaps with a field of view of the 3D camera 8. In one embodiment, the fields of view essentially coincide. For simplicity, it will be assumed that the 2D camera 6 and the 3D camera 8 are arranged sufficiently close to one another that the depth information captured by the 3D camera also provides a good approximation for the distance of the respective object from the image plane of the 2D camera 6. It will be appreciated that, in other embodiments, the 2D camera 6 and the 3D camera 8 may also be arranged remotely from each other, in which case a distance of an object relative to the image plane of the 2D camera 6 may be derived from the depth information captured by the 3D camera 8, when the position of the 3D camera 8 relative to the 2D camera 6 is known.

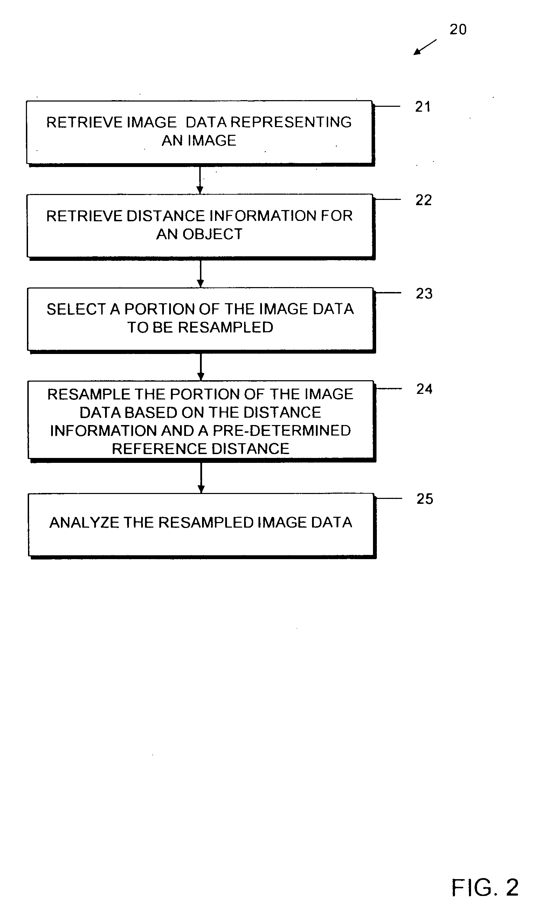

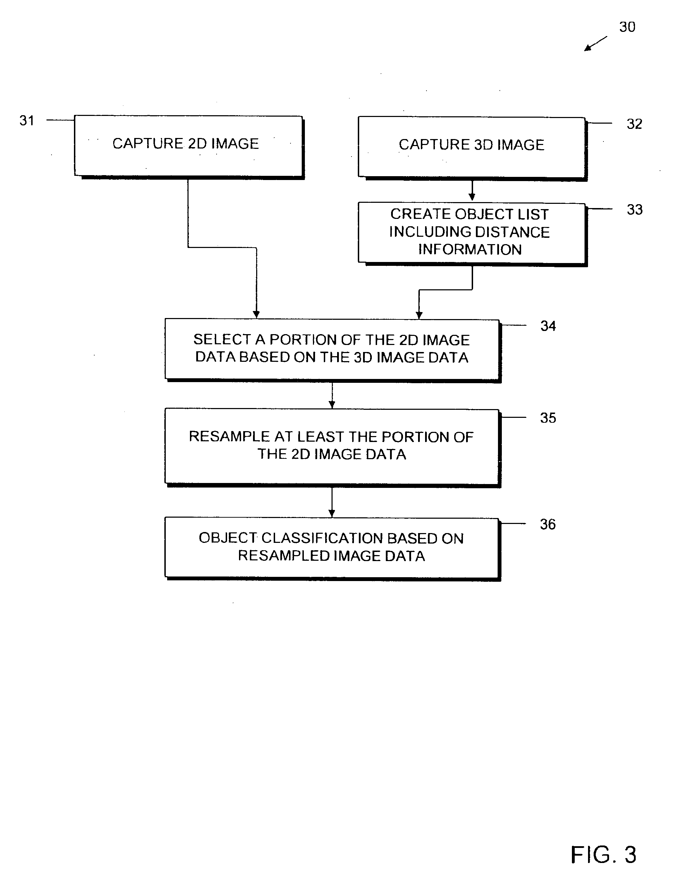

The processing device 3 receives the object list from the 3D camera device 7, which includes distance information for at least one, usually plural objects that are represented in the image captured by the 2D camera 6. As will be explained in more detail with reference to Figs. 2 and 3 below, the processing device 3 resamples at least a portion of the image data based on the distance information for an object represented by the image data and based on a pre-determined reference distance to generate resampled image data that are then evaluated further.

The apparatus 2 is coupled to the assistance device 12 via a bus 11 to provide a result of the image evaluation thereto. The assistance device 12 includes a control device 13, and a warning device 14 and an occupant and/or pedestrian protection device 15 coupled to the control device 13. Based on the signal received from the apparatus 2 via the bus 11, the control device 13 actuates one or both of the warning device 14 and the protection device 15.

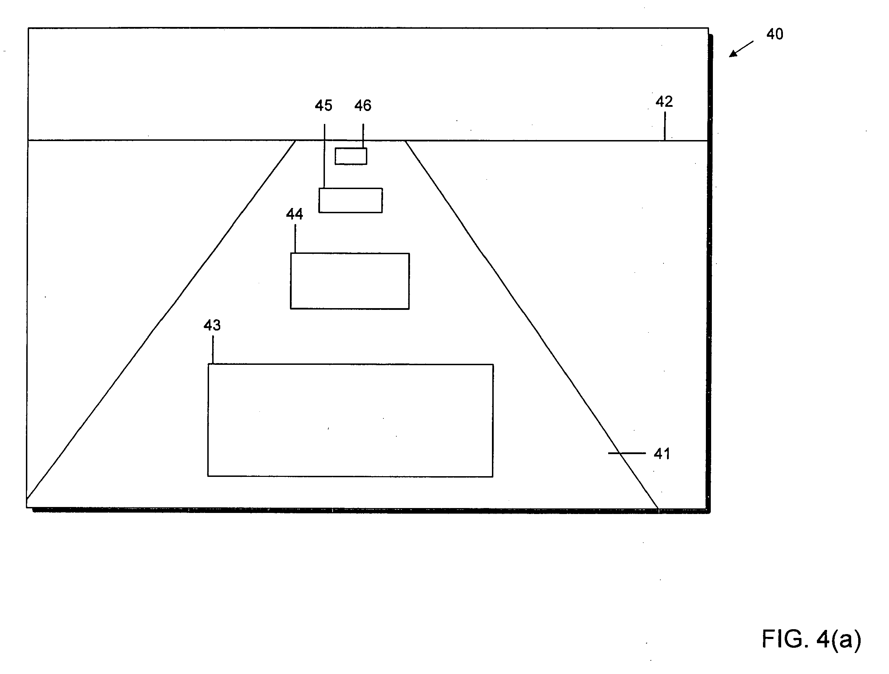

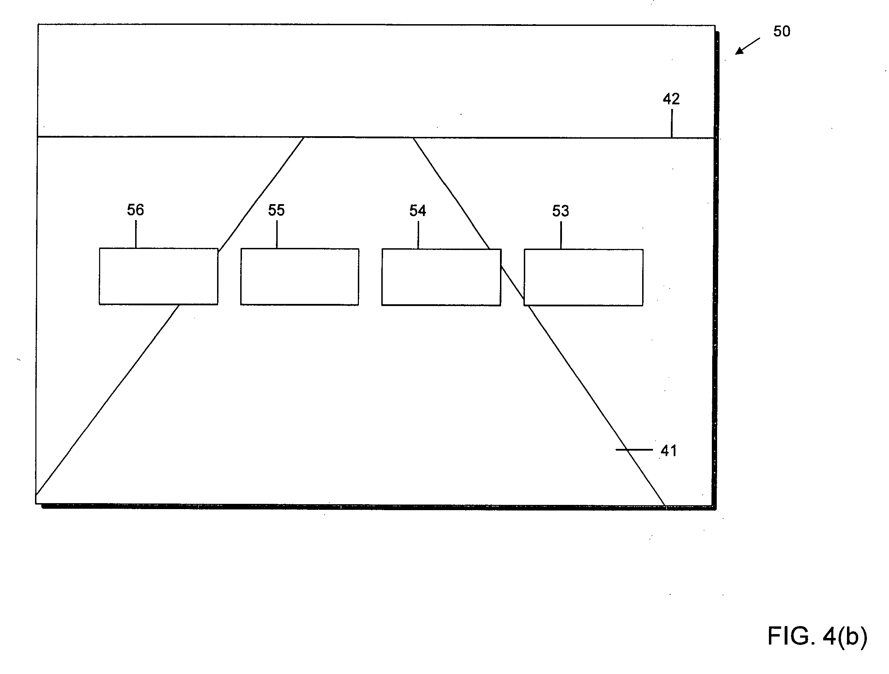

Fig. 2 is a flow diagram representation of a method 20 that may be performed by the processing device 3 of the apparatus 2. At 21, image data representing an image are retrieved. The image data may be retrieved directly from a camera, e.g., the 2D camera 6, or from a storage medium. At 22, distance information on a distance of the object from the image plane is retrieved. The distance information may be a single numerical value, but may also be provided in any other suitable form, e.g., in the form of an object list that includes information on lateral positions and distances for one or plural objects. At 23, a portion of the image data that is to be resampled is selected. The portion of the image data to be resampled may be selected in various ways. If the distance information is obtained from further image data representing a 3D image, step 23 may include identifying a portion of the image data that corresponds to a portion of the further (3D) image data representing at least part of the object, to thereby match the image data and the further image data. At 24, the portion selected at 23 is resampled based on both the distance information and a pre-determined reference distance. In one embodiment, a resampling factor is selected based on both the distance information and the reference distance. As will be explained in more detail with reference to Fig. 4 below, the resampling factor may be selected so that, in the resampled image data, a pixel corresponds to a width of the imaged object that is approximately equal to a width per pixel for an object imaged when it is located at the reference distance from the image plane. In this manner, size variations of the object effected by distance-variations relative to the image plane may be at least partially taken into account. At 25, the resampled image data may be analyzed further.

For reasons of simplicity, the method 20 has been explained above with reference to a case in which only one object of interest is represented by the image data. When plural objects of interest are visible in the image, the steps 22-25 may be performed for each of the objects, or for a subset of the objects that may be selected in dependence on the object types of interest, for example by discarding objects that do not have a roughly rectangular or trapezoidal boundary. It will be appreciated that the distance information retrieved at 22 may vary for different objects, and that the resampling performed at 24 may correspondingly vary in accordance with the different distances relative to the image plane. When the image data represent several objects, steps 22-25 may be performed successively for all objects, or step 22 may first be performed for each of the objects, and subsequently step 23 is performed for each of the objects etc.

The further analysis of the resampled image data at step 25 may, e.g., include comparing the resampled image data to reference data to classify the object. The further analysis of the resampled image data may also include utilizing the resampled image data, e.g., to build up a database of imaged objects, to train image recognition algorithms, or similar.

In one embodiment, the analyzing at step 25 includes classifying the object, i.e., assigning the object to one of a plurality of object types or classes. Referring to Fig. 1, the apparatus 2 includes a storage device 10 to store the reference data that are retrieved in order to classify the object. The reference data include information on a plurality of different object types that are selected from a group comprising cars, lorries, motorcycles, pedestrians, traffic signs or similar. For any one of these object types, the reference data are generated by capturing an image of an object having this object type, e.g., a car, while it is located at a distance from the image plane of the 2D camera 6 that is approximately equal to the pre-determined reference distance. In this manner, the reference data are tailored to recognizing images of objects that have approximately the same size as an image of a reference object located at the pre-determined reference distance from the image plane.

The reference data stored in the storage device 10 may have various forms depending on the specific implementation of the analyzing in step 25. For example, the analyzing at 25 may be based on a learning algorithm that is trained to recognize specific object types. In this case, the reference data may be a set of parameters that control operation of the learning algorithm and have been trained using images of reference objects located at the reference distance from the image plane. In another embodiment, the analyzing at 25 may include determining whether the object represented by the resampled image data has specific geometrical properties, colors, color patterns, or sizes, which may be specified by the reference data. In another embodiment, the analyzing at 25 may include a bit-wise comparison of the resampled image data with a plurality of images of reference objects of various object types taken when the reference objects are located approximately at the reference distance from the image plane.

The distance information retrieved at 22, based on which the portion of the image is resampled at 24, may be obtained in any suitable way. In the apparatus of Fig. 1, the distance information is obtained by capturing and evaluating a 3D image that includes depth information. Therefore, the apparatus 2 evaluates the image captured by the 2D camera 6 based on a sensor fusion of the 2D camera 6 and the 3D camera device 7.

Fig. 3 is a flow diagram representation of a method 30 that may be performed by the apparatus 2. At 31, a 2D image is captured, the 2D image being represented by image data. At 32, a 3D image is captured which is represented by further image data. At 33, the further image data are evaluated to identify portions of the further image data, i.e., regions in the 3D image, that respectively represent an image to thereby generate an object list, which respectively includes distance information on distances of the objects. The object list may be generated utilizing a segmentation algorithm based on the depth information, while additional logical functions may be optionally employed that may be based on symmetries or sizes of objects. The distance information may be inferred from the depth information of the 3D image. The capturing of the 2D image at 31 and the capturing of the 3D image at 32 may be performed simultaneously or successively with a time delay therebetween that is sufficiently short that a motion of objects imaged in the 2D image and the 3D image remains small.

At 34, a portion of the image data is selected based on the further image data. The object list generated at 33 includes information on the pixels or pixel regions in the further image data that represent an object. The portion of the image data is selected by identifying the pixels in the image data that correspond to the pixels or pixel regions in the further image data specified by the object list. If the 2D image and the 3D image have identical resolution and an identical field of view, there is a one-to-one correspondence between a pixel in the image data and a pixel in the further image data. If however, the 3D image has a lower resolution than the 2D image, several pixels of the image data correspond to one pixel of the further image data.

At 35, the portion of the image data that has been selected at 23 is resampled based on the distance information contained in the object list and the pre-determined reference distance to generate resampled image data, as has been explained with reference to step 24 of the method 20 above. At 36, the resampled image data are analyzed to classify the object represented by the portion of the image data that is resampled.

When several objects having various distances from the image plane are identified in the further image data, each of the portions of the image data that represents one of the objects is resampled based on the respective distance information and the pre-determined reference distance.

As will be explained with reference to Fig. 4 next, by resampling the portion of the image data representing one of the objects, size variations of object images that are effected by distance variations may at least partially be taken into account in evaluating the image. Fig. 4(a) schematically illustrates a 2D image 40 showing a road 41. The horizon is schematically indicated by 42. Four objects 43-46, e.g., vehicles, are located on the road at four different distances from the image plane, and sizes of the object images vary correspondingly. A learning algorithm that has been trained on reference objects located approximately at the same distance from the image plane as the object 44, which defines the reference distance, may provide good results in object classification of the object 44, but may lead to poorer results in the classification of objects 43, 45 and 46 due to the distance-induced difference in size.

As is schematically illustrated in Fig. 4(b), by downsampling the portion of the image 40 that represents the object 43, resampled image data 53 are generated that are comparable in size to the portion of the image 40 that represents the object 44, which is also schematically illustrated in Fig. 4(b) as 54. Similarly, by upsampling the portions of the image 40 that represent the objects 45 and 46, resampled image data 55 and 56 are generated that are comparable in size to the portion of the image 40 that represents the object 44. Thus, by appropriately downsampling or upsampling a portion of the image data based on the distance of the object relative to the image plane and the reference distance, resampled image data can be generated in which one pixel corresponds to an object width that is approximately equal to the one of an object represented by the original image data when the object is located at the pre-determined reference distance from the image plane. An object may therefore have an approximately equal size, measured in pixels, in the resampled image data even when the object is imaged at varying distances from the image plane, provided the distance from the image plane is not so large that the object is represented by only a few pixels of the original image data. Thereby, the objects may be virtually brought to the same object plane, as schematically shown in Fig. 4(b), where all objects 53-56 are virtually located at the reference distance from the image plane. It will be appreciated that Fig. 4(b) is only schematic, since the resampled image data do not have to be combined with the remaining portions of the image data to form a new image, but may be separately evaluated.

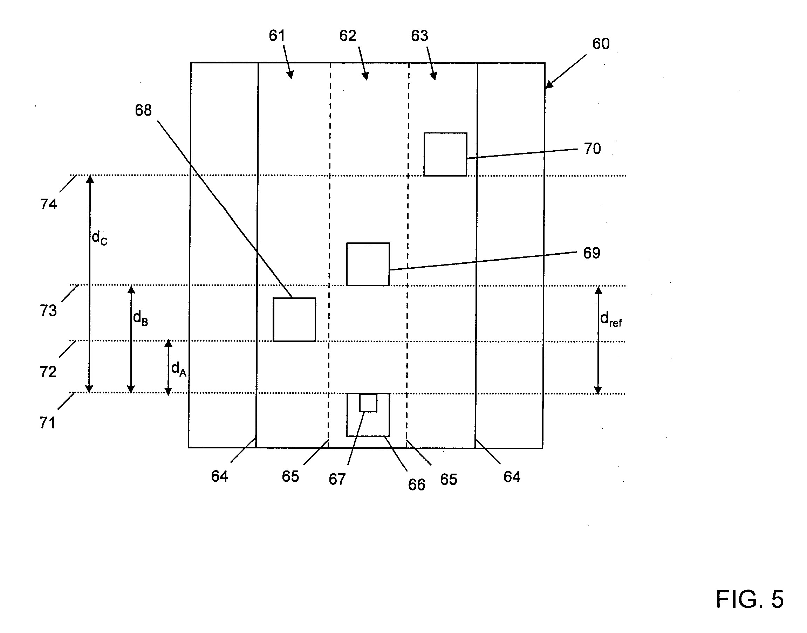

The resampling of a portion of the image data representing an object based on a 3D image will be explained in more detail with reference to Figs. 5-8 next.

Fig. 5 is a schematic top view 60 of a road having three lanes 61-63 that are delimited by lane markers 64 and 65. A vehicle 66 is located on the center lane 62, on which an apparatus 67 is mounted that may be configured as the apparatus 2 shown in Fig. 1. The apparatus 67 includes at least a 2D camera having an image plane 71 and a 3D camera. Three other vehicles 68-70 are located rearward of the vehicle 66 at three different distances $d_A$, $d_B$ and dc, respectively, from the vehicle 66. The distances $d_A$, $d_B$ and dc are respectively defined as distances between the image plane 71 and object planes 72-74 corresponding to frontmost portions of the vehicles 68-70. The distance $d_B$ between the image plane 71 and the object plane 73 associated with the vehicle 69 is equal to the reference distance $d_{ref}$, i.e., vehicle 69 is located at a distance from the image plane that is equal to the reference distance.

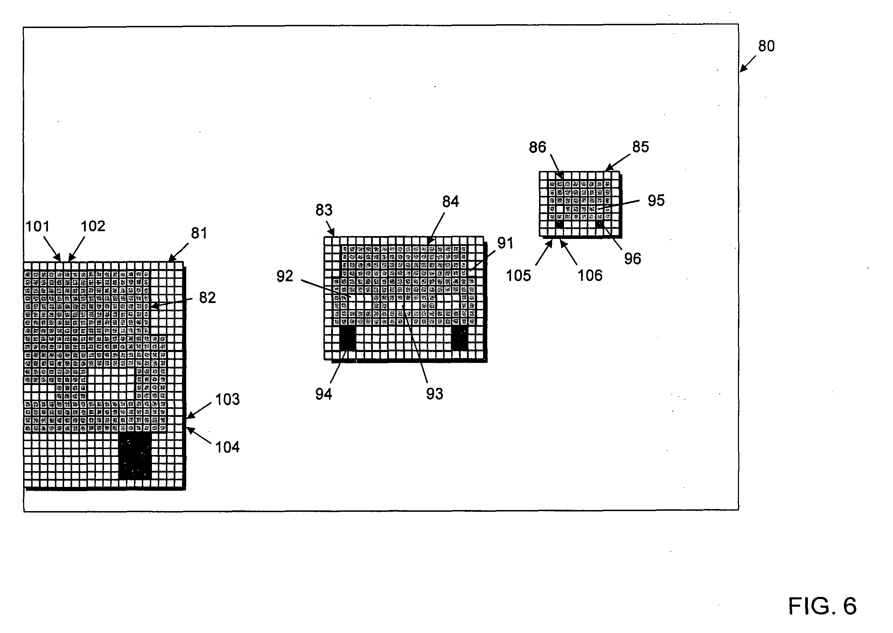

Fig. 6 is a schematic representation of image data 80 captured using the 2D camera of the apparatus 67. The image data has a portion 81 representing an image 82 of the vehicle 68, a portion 83 representing an image 84 of the vehicle 69, and a portion 85 representing an image 86 of the vehicle 70. Pixels of the image data due to the finite pixel resolution of the 2D camera are schematically indicated. The size of the images 82, 84 and 86 representing vehicles 68-70 decreases with increasing distance of the vehicle from the image plane. The variation in the size of the vehicle image with distance from the image plane is dependent on the specific optical characteristics of the 2D camera of the apparatus 67. For illustration, it will be assumed that the size of the vehicle image 82, 84 and 86 is approximately inversely proportional to the distances $d_A$, $d_B$ and dc, respectively, from the image plane 71. In the exemplary image data, characteristic features of the vehicle 69, such as a stepped outer shape 91, headlights 92, a number plate 93 and tires 94, can be identified in the image 84 of vehicle 69 located at the reference distance from the image plane. All these features are also visible in the image 82 representing vehicle 68. However, due to its smaller size and the finite pixel resolution of the image data 80, not all of these features can be identified in the image 86 representing the vehicle 70. For example, the stepped outer shape and number plate are not represented by the image 86. Other features, such as the headlights 95 and tires 96, are distorted due to the finite pixel resolution.

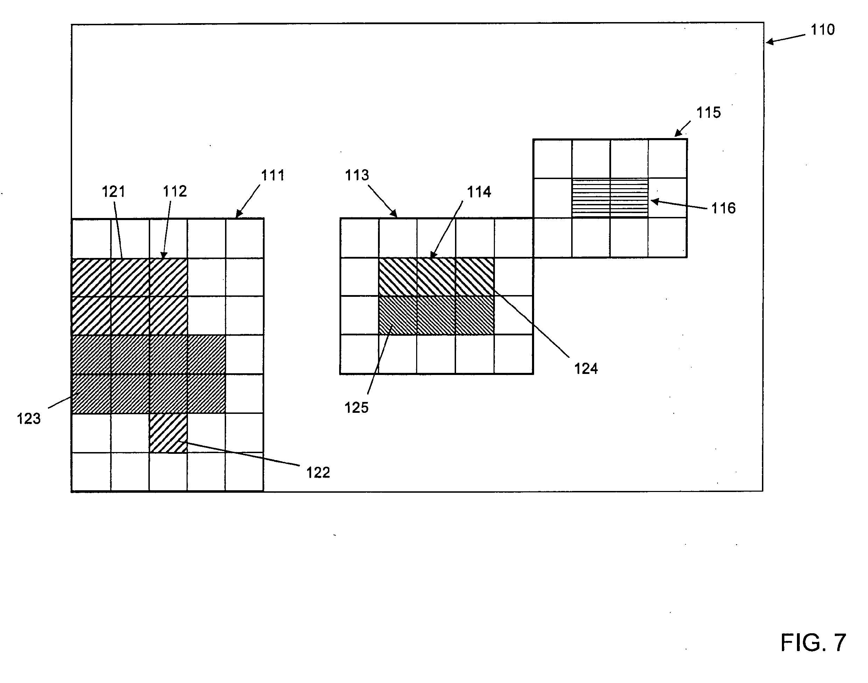

Fig. 7 is a schematic representation of further image data 110 captured using the 3D camera of the apparatus 67. The image data has a portion 111 representing an image 112 of the vehicle 68, a portion 113 representing an image 114 of the vehicle 69, and a portion 115 representing an image 116 of the vehicle 70. Pixels of the image data due to the finite resolution of the 3D camera are schematically indicated. In the illustrated example, the pixel resolution of the 3D camera is lower than the one of the 2D camera, one pixel of the 3D image corresponding to four times four pixels of the 2D image. Further, in the illustrated example, the field of view of the 2D camera is identical to the one of the 3D camera. The further image data include depth information, i.e., information on distances of obstacles located along a plurality of viewing directions. Different depths are schematically indicated by different patterns in Fig. 7. For example, in the image 112 of the vehicle 68, portions 121 and 122 representing a passenger cabin and tire of the vehicle 68, respectively, have a distance relative to the 3D camera that is larger than the one of the portion 123 representing a bonnet of the vehicle 68. In spite of these variations of distance values across the image 111 of the vehicle 68, a segmentation algorithm is capable of assigning the portion 111 of the further image data to one vehicle, as long as the variations of distances lie within characteristic length scales of vehicles. Similarly, while portions 124 and 125 representing a passenger cabin and bonnet, respectively, have different distances from the image plane in the image 114 of the vehicle 69, the portion 113 of the further image data may again be assigned to one vehicle. As schematically indicated by the different patterns of the image 114 as compared to the image 112, the depth information of the further image data indicates that the vehicle 69 is located further away than the vehicle 68. Similarly, the pixel values for the portion 116 indicate that the vehicle 70 represented by the image 116 is located further away than the vehicle 69.

Based on the further image data 110, a segmentation algorithm identifies portions 111, 113 and 115 and assigns them to different objects of an object list. For each of the objects, a distance value is determined, e.g., as the lowest distance value in one of the images 112, 114 and 116, respectively, or as a weighted average of the distance values in the respective image.

It is to be understood that, while not shown in Fig. 7 for clarity, the further image data will include depth information indicative of objects other than the vehicles 68-70 as well, e.g., depth information indicative of the road on which the vehicles are located, trees on the sides of the road or similar. Such background signal can be discriminated from signals indicative of vehicles based, e.g., on characteristic shapes of the latter, or based on the fact that vehicles frequently include vertically extending portions that produce comparable distance values throughout several adjacent pixels.

Based on the lateral positions of the portions 111, 113 and 115 in the further image data 110, corresponding portions in the image data 80 of Fig. 6 are then resampled. The resampling includes identifying, for each of the pixels in the portions 111, 113 and 115 of the further image data, corresponding pixels in the image data 80 to thereby determine the portions of the image data 80 that are to be resampled. In the illustrated example, these portions of the image data correspond to portions 81, 83 and 85, respectively. For each of these portions of the image data, it is determined whether the portion is to be resampled. If the portion is to be resampled, a resampling factor is determined based on the distance of the respective object and the pre-determined reference distance.

In one embodiment, a portion of the image data representing an object is upsampled when the object is located at a distance d from the image plane that is larger than the pre-determined reference distance $d_{ref}$, the upsampling factor being

$$sf_{up} = d/d_{ref}, \tag{1}$$

and the portion of the image data is downsampled when the object is located at a distance d from the image plane that is smaller than the pre-determined reference distance $d_{ref}$, the downsampling factor being

$$sf_{down} = d_{ref}/d. \tag{2}$$

In one embodiment, in order to determine an upsampling factor or downsampling factor, the fractions on the right-hand sides of Equations (1) and (2) are approximated by a rational number that does not have too large numerical values in the numerator and denominator, respectively, or the right-hand sides may be approximated by an integer.

In other embodiments the upsampling and downsampling factors $sf_{up}$ and $sf_{down}$, respectively, may be determined in other ways. For example, the focal length of the 2D camera may be taken into account to model the variations of image size with object distance, and the resampling factors may be determined by dividing the image size in pixels that would have been obtained for an object located at the reference distance from the image plane by the image size in pixels obtained for the actual object distance.

Returning to the example of Figs. 5-7, the portion 81 of the image data 80 is downsampled by a factor $sf_{down} = d_{ref}/d_A = 2$, while the portion 85 of the image data 80 is upsampled by a factor $sf_{up} = d_c/d_{ref} = 2$. Upsampling a portion of the image data by an integer upsampling factor n may be implemented by first copying every row in the portion n-1 times to generate an intermediate image, and then copying every column of the intermediate image n-1 times. Similarly, downsampling by an integer downsampling factor n may be implemented by retaining only every $n^{th}$ row of the portion to generate an intermediate image, and then retaining only every $n^{th}$ column of the intermediate image to generate the resampled image data. Upsampling by a fractional sampling factor $sf = p/q$, where p and q are integers, may be implemented by upsampling by a sampling factor p and, subsequently, downsampling by a sampling factor q. Downsampling by fractional sampling factors may be implemented in a corresponding manner.

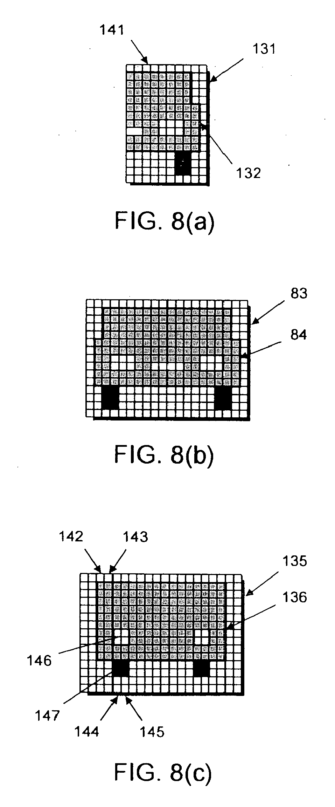

Fig. 8 schematically illustrates resampled image data obtained by resampling the portions 81 and 85 of the image data 80. Fig. 8(a) shows resampled image data 131 obtained by downsampling the portion 81 of the image data by $sf_{down} = 2$. The resulting image 132 shows the vehicle 68 at approximately the same level of detail and having approximately the same size as the image 84 of the vehicle 69 located at the reference distance. As explained above, the resampled image data 131 is obtained by removing every second pixel row and every second pixel column from the portion 81. For example, column 141 of the resampled image data 131 corresponds to column 101 of the portion 81 with every second pixel in the column having been removed.

Fig. 8(c) shows resampled image data 135 obtained by upsampling the portion 85 of the image data by $sf_{up} = 2$. In the upsampled image data, every pixel of the portion 85 has been copied onto two times two pixels. For example, column 142 of the resampled image data 135 is generated by copying every pixel of column 105 of the portion 85 onto the vertically adjacent pixel, and column 143 is a copy of column 142. Similarly, columns 144 and 145 of the resampled image data are obtained from column 106 of the portion 85. While the resulting image 136 of the vehicle 70 does not include additional details as compared to the image 86 in the original image data, the total size of the vehicle image 136 and of specific features, such as the headlights 146 and tires 147, becomes comparable to the one of the image 84 of the vehicle 69 that is located at the reference distance relative to the image plane.

Fig. 8(b) shows the image 84 of the vehicle 69. The portion 83 does not need to be resampled, since vehicle 69 is located at the reference distance.

As may be seen from Fig. 8(a) and 8(c), by resampling portions of the image data, the images 132 and 136 of the vehicles 68 and 70 may be scaled such that the vehicles are virtually brought to the reference distance from the image plane. A further analysis or evaluation of the image data that relies on reference data captured when vehicles are located at the reference distance, is facilitated by the resampling. For example, when a learning algorithm for image recognition has been trained on the image 84 of the vehicle, it may be difficult for the learning algorithm to correctly identify the images 82 and 86 in the image data, while images 132 and 136 in the resampled image data may be more readily classified as vehicles.

Upsampling and downsampling of portions of the image data may also be performed in other ways than the ones described above. For example, in downsampling, filters may be employed that model the changing resolution as a vehicle is located further away from the image plane. Thereby, the level of detail that may still be recognized in the resampled image data may be controlled more accurately. Upsampling may also be performed by using interpolating functions to interpolate, e.g., pixel color values when adding more pixels. Upsampling may also be performed by capturing a new image of the field of view in which the portion to be upsampled is located, i.e., by zooming into this field of view using the 2D camera to capture a new, higher resolution image.

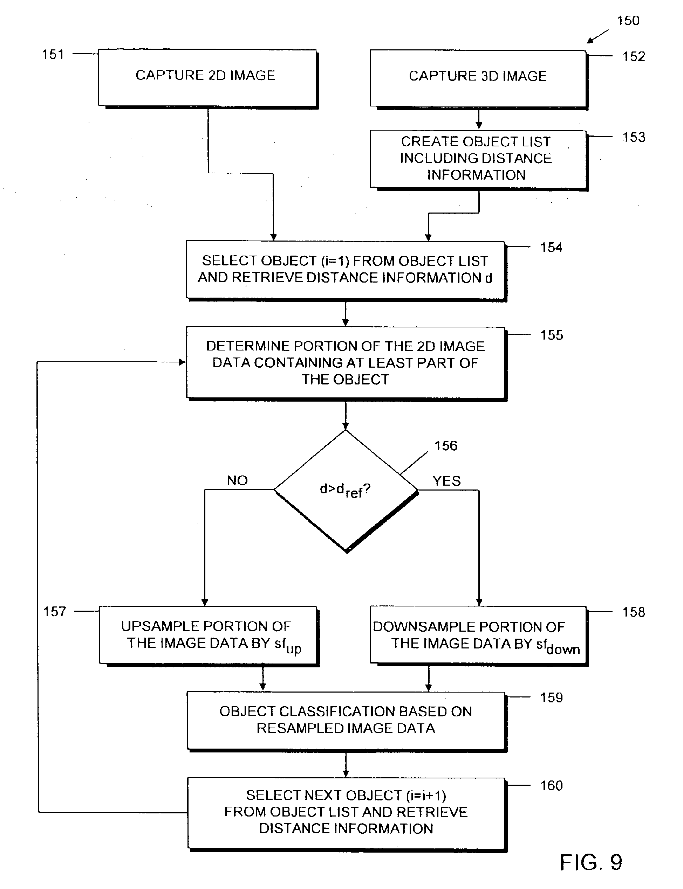

Fig. 9 is a flow diagram representation of a method 150 that may be performed by the apparatus 2 of Fig. 1 or the apparatus 67 of Fig. 5. In the method 150, at 151-153 capturing of 2D and 3D images and generating an object list based on the 3D image is performed. These steps may be implemented as has been explained with reference to Fig. 3 above.

At 154, an object is selected from the object list, and its distance relative to the image plane is retrieved. At 155, a portion of the image data representing the 2D image is determined that contains at least part of the object. The determining at 155 may again include matching the 2D and 3D images, e.g., by mapping pixels of the 3D image onto corresponding pixels of the 2D image.

At 156, the distance d retrieved from the object list is compared to the reference distance $d_{ref}$. If d is less than or equal to $d_{ref}$, at 157, the portion of the image data is upsampled by an upsamplig factor $sf_{up}$ that may be determined, e.g., as explained with reference to Equation (1) above. If d is larger than $d_{ref}$, at 156, the portion of the image data is downsampled by a down-samplig factor $sf_{down}$ that may be determined, e.g., as explained with reference to Equation (2) above.

At 159, the object is then classified based on the resampled image data. Object classification may be performed as explained with reference to step 36 in Fig. 3.

At 160, a new object is selected from the object list and its distance information is retrieved, and steps 155-159 are repeated.

The method 150 may be repeated at regular time intervals. For example, when the apparatus 2 is installed onboard a vehicle, the method 150 may be repeated several times per second to monitor the surroundings of the vehicle in a quasi-continuous manner.

It is to be understood that the configuration of the apparatus 2 for evaluating an image shown in Fig. 1 is only exemplary, and that various other configurations may be implemented in other embodiments.

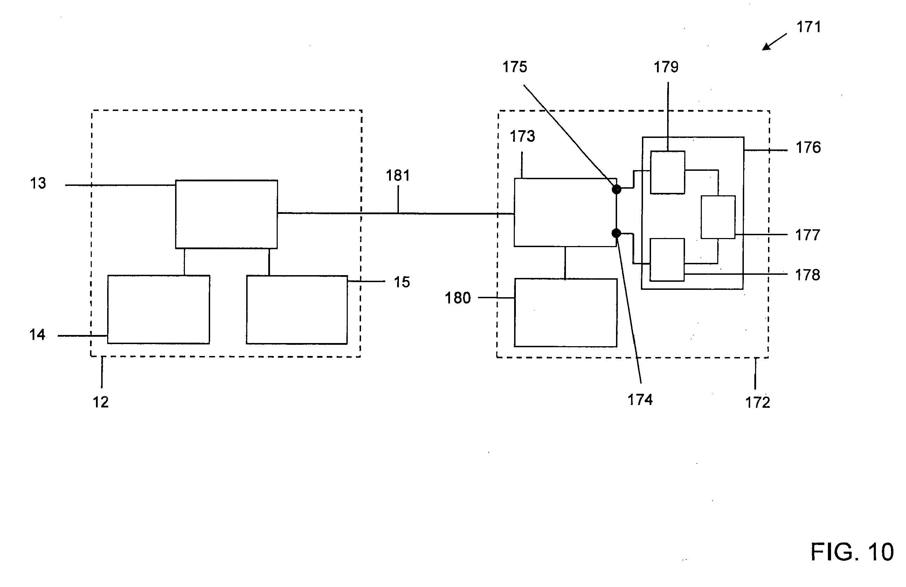

Fig. 10 is a schematic block diagram representation of a driver assistance system 171, which includes an apparatus 172 for evaluating an image according to another embodiment and an assistance device 12. The assistance device 12, which is coupled to the apparatus 172 via a bus 181, may be configured as described with reference to Fig. 1 above.

The apparatus 172 includes a processing device 173, which has an input 174 to receive image data representing the image to be evaluated and a further input 175 to receive distance information on a distance of an object that is represented by the image relative to an image plane. The processing device 173 is further coupled to a storage device 180 that has stored thereon reference data for object classification.

The apparatus 172 further comprises a 3D camera device 176 that includes a 3D camera 177, e.g., a stereo camera, an object identification device 179 and an image processor 178. The object identification device 179 is coupled to the 3D camera 177 to identify objects in a 3D image taken by the 3D camera 177, e.g., in the two images taken by a stereo camera, and their position relative to an image plane of the 3D camera 177, and to provide this information to the processing device 173 at input 175. The image processor 178 is coupled to the 3D camera 177 to generate image data representing a 2D image based on the 3D image taken by the 3D camera 177. For example, when the 3D camera is a stereo camera, the image processor 178 may generate a 2D image by merging data from the two images captured by the stereo camera, or the 2D image may set to be identical to one of the two images captured by the stereo camera. The image data representing the 2D image are provided to the processing device 173 at input 174.

The processing device 173 receives the distance information at input 175 and the image data at input 174, and resamples a portion of the image data based on the distance information and a pre-determined reference distance. The processing device 173 may operate according to any one of the methods explained with reference to Figs. 2-9 above.

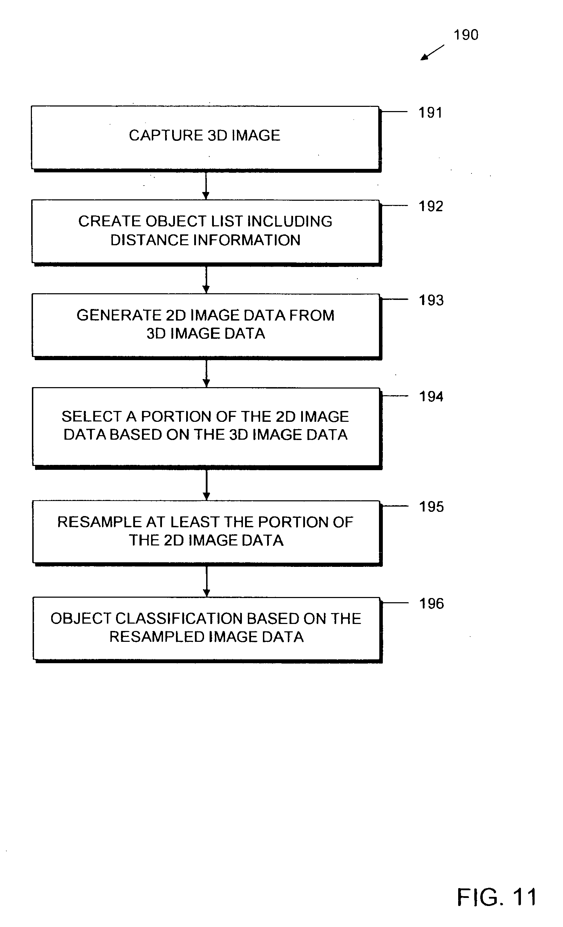

Fig. 11 is a flow diagram representation of a method 190 that may be performed by the apparatus 171 of Fig. 10. At 191, a 3D image is captured which is represented by 3D image data. At 192, an object list including distance information for objects represented by the image is generated based on the 3D image data. At 193, image data representing a 2D image are generated based on the 3D image. At 194, a portion of the image data is selected based on the object list, i.e., based on an analysis of the 3D image data. At 195, at least a portion of the image data is resampled based on the distance information and the pre-determined reference distance to thereby generate resampled image data. At 196, the resampled image data are evaluated, e.g., by performing object classification.

It is to be understood that the above description of embodiments is illustrative rather than limiting, and that various modifications may be implemented in other embodiments. For example, while the object identification device 9 of the apparatus 2 and the object identification device 179 of the apparatus 172 have been shown to be comprised by the 3D camera devices 7 and 176, respectively, the object identification device may also be formed integrally with the processing devices 3 and 173, respectively. I.e., the object list may be generated by the processing device.

It is also to be understood that the various physical entities, such as the 2D camera, the 3D camera, the processing device, the object identification device, and the storage device of the apparatus, may be implemented by any suitable hardware, software or combination thereof. For example, the 2D camera may be a CMOS camera, a CCD camera, or any other camera or combination of optical components that provides image data. Similarly, the 3D camera may be configured as a PMD camera, a stereo camera, or any other device that is suitable for capturing depth information. The processing device may be a special purpose circuit or a general purpose processor that is suitably programmed.

Further, various components of the apparatus shown in Fig. 1 and 10, or of any other embodiment explained above, may be formed integrally or may be grouped together to form devices as suitable for the anticipated application. For example, in one exemplary embodiment, the processing device 3 and the storage device 10 of Fig. 1 may be comprised by the driver assistance system 12, or the processing device 173 and the storage device 180 of Fig. 10 may be comprised by the driver assistance system 12. Still further, the object identification device 9 may also be comprised by the driver assistance device 12. The processing device 3, 173 may be formed integrally with a control unit 13 or processor of the driver assistance device 12, i.e., one processor provided in the driver assistance device 12 may both control the operation of the warning and/or protection devices 14, 15 and may perform the method for evaluating an image according to any one embodiment. Still further, the object identification device, the processing device and the control device of the driver assistance device may be integrally formed. It will be appreciated that other modifications may be implemented in other embodiments, in which the various components are arranged and interconnected in any other suitable way.

While embodiments of the present invention have been described with reference to applications in driver assistance systems, the present invention is not limited to this application and may be readily used for any application where images are to be evaluated. For example, embodiments of the invention may also be employed in the surveillance of public areas, or in image analysis for biological, medical or other scientific applications.

**Claims**

1. A method of evaluating an image, comprising the steps
   retrieving image data (40; 80) representing said image,
   retrieving distance information on a distance ($d_A$, $d_B$, dc) of an object (43-46; 68-70) relative to an image plane (71) of said image, at least part of said object (43-46; 68-70) being represented by said image data (40; 80), and
   resampling at least a portion (43, 45, 46; 81, 85) of said image data (40; 80) based both on said distance information and on a pre-determined reference distance ($d_{ref}$) to generate resampled image data (53, 55, 56; 131, 135), said portion (43, 45, 46; 81, 85) of said image data (40; 80) to be resampled representing at least part of said object (43, 45, 46; 68, 70).

2. The method of claim 1,
   wherein said portion of said image data (40; 80) is resampled by a resampling factor determined based on a comparison of said distance ($d_A$, $d_B$, dc) of said object (43, 45, 46; 68, 70) and said reference distance ($d_{ref}$).

3. The method of claim 1 or 2,
   wherein said portion of said image data (40; 80) is upsampled when said distance (dc) of said object (45, 46; 70) exceeds a pre-determined threshold, which is larger than or equal to said reference distance ($d_{ref}$).

4. The method of any one of the preceding claims,
   wherein said portion of said image data (40; 80) is downsampled when said distance ($d_A$) of said object (43; 68) is less than a further pre-determined threshold, which is less than or equal to said reference distance ($d_{ref}$).

5. The method of any one of the preceding claims,
   wherein a pixel of said resampled image data (53, 55, 56; 131, 135) corresponds to an object width that is approximately equal to a width per pixel in said image data (40; 80) of an object (44; 69) located at said reference distance ($d_{ref}$) from said image plane (71).

6. The method of any one of the preceding claims, comprising the step
   obtaining further image data (110) representing a three-dimensional image and comprising depth information, a field of view of said three-dimensional image overlapping with a field of view of said image.

7. The method of claim 6, comprising the step
identifying a portion (111, 113, 115) of said further image data (110) representing at least part of said object (68-70) based on said depth information.

8. The method of claim 7, comprising the step
selecting said portion (43, 45, 46; 81, 85) of said image data (40; 80) to be resampled based on said identified portion (111, 113, 115) of said further image data (110).

9. The method of claim 8,
wherein said step of selecting said portion (43, 45, 46; 81, 85) of said image data (40; 80) comprises identifying at least one pixel of said image data (40; 80) that corresponds to a pixel of said further image data (110) comprised by said portion (111, 113, 115) of said further image data (110).

10. The method of any one of claims 6-9, comprising the step
determining said distance information based on said further image data (110).

11. The method of any one of claims 6-10, comprising the step
capturing said three-dimensional image utilizing a PMD (Photonic Mixer Device) camera (8) or a stereo camera (177).

12. The method of any one of the preceding claims, comprising the step capturing said image utilizing a 2D camera (6; 177, 178).

13. The method of any one of the preceding claims, comprising the steps
retrieving reference data on a plurality of reference objects representing a plurality of object types, and analyzing said resampled image data (53, 55, 56; 131, 135) based on said reference data to classify said object into one of said plurality of object types.

14. The method of claim 13,
wherein said plurality of object types is selected from a group comprising cars, lorries, motorcycles, traffic signs and pedestrians.

15. The method of claim 13 or 14,
wherein said reference data are generated based on an image of at least one of said reference objects at a distance from said image plane (71) that is approximately equal to said reference distance ($d_{ref}$).

16. The method of any one of claims 13-15,
wherein said steps of retrieving distance information, resampling and analyzing are respectively performed for each of a plurality of objects (43, 45, 46; 68, 70) represented by said image data (40; 80).

17. The method of any one of claims 13-16, comprising the step
providing a result of said analyzing to a driver assistance device (12).

18. A data storage medium having stored thereon instructions which, when executed by a processor (3; 173) of an electronic computing device (2; 172), direct the computing device (2; 172) to perform the method of any one of the preceding claims.

19. An apparatus for evaluating an image, comprising
a processing device (3; 173) having an input (4; 174) to receive image data (40; 80) representing said image and a further input (5; 175) to receive distance information on a distance ($d_A$, $d_B$, dc) of an object (43-46; 68-70) relative to an image plane (71) of said image, at least part of said object (43-46; 68-70) being represented by said image, wherein said processing device (3; 173) is configured to resample at least a portion (43, 45, 46; 81, 85) of said image data (40; 80) based both on said distance information and on a pre-determined reference distance ($d_{ref}$) to generate resampled image data (53, 55, 56; 131, 135), said portion of said image data (40; 80) to be resampled representing at least part of said object (43, 45, 46; 68, 70).

20. The apparatus of claim 19, comprising

a 3D camera device (7; 176) coupled to said further input, said 3D camera device (7; 176) being configured to capture further image data (110) representing a three-dimensional image and comprising depth information, a field of view of said three-dimensional image overlapping with a field of view of said image.

**21.** The apparatus of claim 20,
wherein said 3D camera device (7; 176) comprises a PMD (Photonic Mixer Device) camera (8) or a stereo camera (177).

**22.** The apparatus of claim 20 or 21,
wherein said 3D camera device (7; 176) comprises an object identification device (9; 179) configured to identify objects (43-46; 68-70) and their respective distances ($d_A$, $d_B$, dc) based on said further image data (110).

**23.** The apparatus of claim 22,
wherein said object identification device (9; 179) is configured to determine said distance information based on said further image data (110) and to provide said distance information to said processing device (3; 173).

**24.** The apparatus of any one of claims 20-23,
wherein said 3D camera device (7; 176) is configured to provide information on a portion (111, 113, 115) of said further image data (110) representing at least part of said object to said processing device (3; 173).

**25.** The apparatus of claim 24,
wherein said processing device (3; 173) is configured to select said portion (43, 45, 46; 81, 85) of said image data (40; 80) based on said information on said portion (111, 113, 115) of said further image data (110).

**26.** The apparatus of any one of claims 19-25, comprising
a 2D camera (6; 177, 178) coupled to said input of said processing device (3; 173) and configured to capture said image.

**27.** The apparatus of claim 26,
wherein said 2D camera (6) comprises a CCD camera or a CMOS camera.

**28.** The apparatus of any one of claims 19-27,
wherein said processing device (3; 173) is configured to resample said portion (43, 45, 46; 81, 85) of said image data (40; 80) by a resampling factor determined based on a comparison of said distance ($d_A$, $d_B$, dc) of said object and said reference distance ($d_{ref}$).

**29.** The apparatus of any one of claims 19-28,
wherein said processing device (3; 173) is configured to upsample said portion (45, 46; 85) of said image data (40; 80) when said distance ($d_c$) of said object (45, 46; 70) exceeds a pre-determined threshold, which is larger than or equal to said reference distance ($d_{ref}$), and to downsample said portion (46; 81) of said image data (40; 80) when said distance ($d_A$) of said object (43; 68) is less than a further pre-determined threshold, which is less than or equal to said reference distance ($d_{ref}$).

**30.** The apparatus of any one of claims 19-29,
wherein said processing device (3; 173) is configured to resample said portion (43, 45, 46; 81, 85) of said image data (40; 80) such that a pixel of said resampled image data (53, 55, 56; 131, 135) corresponds to an object width that is approximately equal to a width per pixel in said image data (40; 80) of an object (44; 69) located at said reference distance ($d_{ref}$) from said image plane (71).

**31.** The apparatus of any one of claims 19-30, comprising
a storage device (10; 180) having stored thereon reference data on a plurality of reference objects representing a plurality of object types, said processing device (3; 173) being coupled to said storage device (10; 180) to retrieve said reference data and being configured to analyze said resampled image data (53, 55, 56; 131, 135) based on said reference data to classify said object (43-46; 68-70) into one of said plurality of object types.

**32.** The apparatus of claim 31,
wherein said plurality of object types is selected from a group comprising cars, lorries, motorcycles, traffic signs and pedestrians.

**33.** The apparatus of claim 31 or 32,
wherein said reference data are generated based on an image of at least one of said reference objects at a distance
from said image plane (71) that is approximately equal to said reference distance ($d_{ref}$).

**34.** A driver assistance system, comprising
the apparatus (2; 172) of any one of claims 19-33.

**35.** The driver assistance system of claim 34, comprising
an output unit (14) for providing at least one of optical, acoustical or tactile output signals based on a result of an
image evaluation performed by said apparatus (2; 172).

**36.** The driver assistance system of claim 34 or 35, comprising
an occupant and/or pedestrian protection system (15) coupled to said apparatus (2; 172) and configured to be
actuated based on a result of an image evaluation performed by said apparatus (2; 172).


**Amended claims in accordance with Rule 137(2) EPC.**

**1.** A method of evaluating an image, comprising the steps
retrieving image data (40; 80) representing said image,
retrieving distance information on a distance ($d_A$, $d_B$, $d_C$) of an object (43-46; 68-70) relative to an image plane (71)
of said image, at least part of said object (43-46; 68-70) being represented by said image data (40; 80), and
resampling at least a portion (43, 45, 46; 81, 85) of said image data (40; 80) based both on said distance information
and on a pre-determined reference distance ($d_{ref}$) to generate resampled image data (53, 55, 56; 131, 135), said
portion (43, 45, 46; 81, 85) of said image data (40; 80) to be resampled representing at least part of said object (43,
45, 46; 68, 70),
**characterized in that** the method comprises the steps
obtaining further image data (110) representing a three-dimensional image and comprising depth information, a
field of view of said three-dimensional image overlapping with a field of view of said image, and
determining said distance information based on said further image data (110).

**2.** The method of claim 1,
wherein said portion of said image data (40; 80) is resampled by a resampling factor determined based on a
comparison of said distance ($d_A$, $d_B$, $d_C$) of said object (43, 45, 46; 68, 70) and said reference distance ($d_{ref}$).

**3.** The method of claim 1 or 2,
wherein said portion of said image data (40; 80) is upsampled when said distance ($d_C$) of said object (45, 46; 70)
exceeds a pre-determined threshold, which is larger than or equal to said reference distance ($d_{ref}$).

**4.** The method of any one of the preceding claims,
wherein said portion of said image data (40; 80) is downsampled when said distance ($d_A$) of said object (43; 68) is
less than a further pre-determined threshold, which is less than or equal to said reference distance ($d_{ref}$).

**5.** The method of any one of the preceding claims,
wherein a pixel of said resampled image data (53, 55, 56; 131, 135) corresponds to an object width that is approximately equal to a width per pixel in said image data (40; 80) of an object (44; 69) located at said reference distance
($d_{ref}$) from said image plane (71).

**6.** The method of any one of the preceding claims, comprising the step
identifying a portion (111, 113, 115) of said further image data (110) representing at least part of said object (68-70)
based on said depth information.

**7.** The method of claim 6, comprising the step
selecting said portion (43, 45, 46; 81, 85) of said image data (40; 80) to be resampled based on said identified
portion (111, 113, 115) of said further image data (110).

**8.** The method of claim 7,
wherein said step of selecting said portion (43, 45, 46; 81, 85) of said image data (40; 80) comprises identifying at least one pixel of said image data (40; 80) that corresponds to a pixel of said further image data (110) comprised by said portion (111, 113, 115) of said further image data (110).

**9.** The method of any one of the preceding claims, comprising the step
capturing said three-dimensional image utilizing a PMD (Photonic Mixer Device) camera (8) or a stereo camera (177).

**10.** The method of any one of the preceding claims, comprising the step capturing said image utilizing a 2D camera (6; 177, 178).

**11.** The method of any one of the preceding claims, comprising the steps
retrieving reference data on a plurality of reference objects representing a plurality of object types, and
analyzing said resampled image data (53, 55, 56; 131, 135) based on said reference data to classify said object into one of said plurality of object types.

**12.** The method of claim 11,
wherein said plurality of object types is selected from a group comprising cars, lorries, motorcycles, traffic signs and pedestrians.

**13.** The method of claim 11 or 12,
wherein said reference data are generated based on an image of at least one of said reference objects at a distance from said image plane (71) that is approximately equal to said reference distance ($d_{ref}$).

**14.** The method of any one of claims 11-13,
wherein said steps of retrieving distance information, resampling and analyzing are respectively performed for each of a plurality of objects (43, 45, 46; 68, 70) represented by said image data (40; 80).

**15.** The method of any one of claims 11-14, comprising the step
providing a result of said analyzing to a driver assistance device (12).

**16.** A data storage medium having stored thereon instructions which, when executed by a processor (3; 173) of an electronic computing device (2; 172), direct the computing device (2; 172) to perform the method of any one of the preceding claims.

**17.** An apparatus for evaluating an image, comprising
a processing device (3; 173) having an input (4; 174) to receive image data (40; 80) representing said image and a further input (5; 175) to receive distance information on a distance ($d_A$, $d_B$, $d_C$) of an object (43-46; 68-70) relative to an image plane (71) of said image, at least part of said object (43-46; 68-70) being represented by said image, wherein said processing device (3; 173) is configured to resample at least a portion (43, 45, 46; 81, 85) of said image data (40; 80) based both on said distance information and on a pre-determined reference distance ($d_{ref}$) to generate resampled image data (53, 55, 56; 131, 135), said portion of said image data (40; 80) to be resampled representing at least part of said object (43, 45, 46; 68, 70),
**characterized by**
a 3D camera device (7; 176) coupled to said further input, said 3D camera device (7; 176) being configured to capture further image data (110) representing a three-dimensional image and comprising depth information, a field of view of said three-dimensional image overlapping with a field of view of said image.

**18.** The apparatus of claim 17,
wherein said 3D camera device (7; 176) comprises a PMD (Photonic Mixer Device) camera (8) or a stereo camera (177).

**19.** The apparatus of claim 17 or 18,
wherein said 3D camera device (7; 176) comprises an object identification device (9; 179) configured to identify objects (43-46 ; 68-70) and their respective distances ($d_A$, $d_B$, $d_C$) based on said further image data (110).

**20.** The apparatus of claim 19,
wherein said object identification device (9; 179) is configured to determine said distance information based on said further image data (110) and to provide said distance information to said processing device (3; 173).

**21.** The apparatus of any one of claims 17-20,
wherein said 3D camera device (7; 176) is configured to provide information on a portion (111, 113, 115) of said further image data (110) representing at least part of said object to said processing device (3; 173).

**22.** The apparatus of claim 21,
wherein said processing device (3; 173) is configured to select said portion (43, 45, 46; 81, 85) of said image data (40; 80) based on said information on said portion (111, 113, 115) of said further image data (110).

**23.** The apparatus of any one of claims 17-22, comprising
a 2D camera (6; 177, 178) coupled to said input of said processing device (3; 173) and configured to capture said image.

**24.** The apparatus of claim 23,
wherein said 2D camera (6) comprises a CCD camera or a CMOS camera.

**25.** The apparatus of any one of claims 17-24,
wherein said processing device (3; 173) is configured to resample said portion (43, 45, 46; 81, 85) of said image data (40; 80) by a resampling factor determined based on a comparison of said distance ($d_A$, $d_B$, $d_C$) of said object and said reference distance ($d_{ref}$).

**26.** The apparatus of any one of claims 17-25,
wherein said processing device (3; 173) is configured to upsample said portion (45, 46; 85) of said image data (40; 80) when said distance (dc) of said object (45, 46; 70) exceeds a pre-determined threshold, which is larger than or equal to said reference distance ($d_{ref}$), and to downsample said portion (46; 81) of said image data (40; 80) when said distance ($d_A$) of said object (43; 68) is less than a further pre-determined threshold, which is less than or equal to said reference distance ($d_{ref}$).

**27.** The apparatus of any one of claims 17-26,
wherein said processing device (3; 173) is configured to resample said portion (43, 45, 46; 81, 85) of said image data (40; 80) such that a pixel of said resampled image data (53, 55, 56; 131, 135) corresponds to an object width that is approximately equal to a width per pixel in said image data (40; 80) of an object (44; 69) located at said reference distance ($d_{ref}$) from said image plane (71).

**28.** The apparatus of any one of claims 17-27, comprising
a storage device (10; 180) having stored thereon reference data on a plurality of reference objects representing a plurality of object types, said processing device (3; 173) being coupled to said storage device (10; 180) to retrieve said reference data and being configured to analyze said resampled image data (53, 55, 56; 131, 135) based on said reference data to classify said object (43-46; 68-70) into one of said plurality of object types.

**29.** The apparatus of claim 28,
wherein said plurality of object types is selected from a group comprising cars, lorries, motorcycles, traffic signs and pedestrians.

**30.** The apparatus of claim 28 or 29,
wherein said reference data are generated based on an image of at least one of said reference objects at a distance from said image plane (71) that is approximately equal to said reference distance ($d_{ref}$).

**31.** A driver assistance system, comprising
the apparatus (2; 172) of any one of claims 17-30.

**32.** The driver assistance system of claim 31, comprising
an output unit (14) for providing at least one of optical, acoustical or tactile output signals based on a result of an image evaluation performed by said apparatus (2; 172).

**33.** The driver assistance system of claim 31 or 32, comprising
an occupant and/or pedestrian protection system (15) coupled to said apparatus (2; 172) and configured to be actuated based on a result of an image evaluation performed by said apparatus (2; 172).

FIG. 1

20

RETRIEVE IMAGE DATA REPRESENTING
AN IMAGE — 21

↓

RETRIEVE DISTANCE INFORMATION FOR
AN OBJECT — 22

↓

SELECT A PORTION OF THE IMAGE DATA
TO BE RESAMPLED — 23

↓

RESAMPLE THE PORTION OF THE IMAGE
DATA BASED ON THE DISTANCE
INFORMATION AND A PRE-DETERMINED
REFERENCE DISTANCE — 24

↓

ANALYZE THE RESAMPLED IMAGE DATA — 25

FIG. 2

30

31 — CAPTURE 2D IMAGE

CAPTURE 3D IMAGE — 32

CREATE OBJECT LIST INCLUDING DISTANCE INFORMATION — 33

SELECT A PORTION OF THE 2D IMAGE DATA BASED ON THE 3D IMAGE DATA — 34

RESAMPLE AT LEAST THE PORTION OF THE 2D IMAGE DATA — 35

OBJECT CLASSIFICATION BASED ON RESAMPLED IMAGE DATA — 36

FIG. 3

FIG. 4(a)

EP 2 026 246 A1

FIG. 4(b)

FIG. 5

EP 2 026 246 A1

FIG. 6

FIG. 7

FIG. 8(a)

FIG. 8(b)

FIG. 8(c)

150

151 — CAPTURE 2D IMAGE

CAPTURE 3D IMAGE — 152

CREATE OBJECT LIST
INCLUDING DISTANCE
INFORMATION — 153

SELECT OBJECT (i=1) FROM OBJECT LIST
AND RETRIEVE DISTANCE INFORMATION d — 154

DETERMINE PORTION OF THE 2D IMAGE
DATA CONTAINING AT LEAST PART OF
THE OBJECT — 155

156

NO          $d > d_{ref}$?          YES

157 — UPSAMPLE PORTION OF
THE IMAGE DATA BY $sf_{up}$

DOWNSAMPLE PORTION OF
THE IMAGE DATA BY $sf_{down}$ — 158

OBJECT CLASSIFICATION BASED ON
RESAMPLED IMAGE DATA — 159

SELECT NEXT OBJECT (i=i+1)
FROM OBJECT LIST AND RETRIEVE
DISTANCE INFORMATION — 160

FIG. 9

FIG. 10

190

CAPTURE 3D IMAGE — 191

↓

CREATE OBJECT LIST INCLUDING
DISTANCE INFORMATION — 192

↓

GENERATE 2D IMAGE DATA FROM
3D IMAGE DATA — 193

↓

SELECT A PORTION OF THE 2D IMAGE
DATA BASED ON THE 3D IMAGE DATA — 194

↓

RESAMPLE AT LEAST THE PORTION OF
THE 2D IMAGE DATA — 195

↓

OBJECT CLASSIFICATION BASED ON THE
RESAMPLED IMAGE DATA — 196

FIG. 11

European Patent
Office

**EUROPEAN SEARCH REPORT**

Application Number

EP 07 01 5282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STAUFFER, CHRIS; TIEU, KINH; LEE, LILY: "Robust automated planar normalization of tracking data" JOINT IEEE INTERNATIONAL WORKSHOP ON VISUAL SURVEILLANCE AND PERFORMANCE EVALUATION IN TRACKING AND SURVEILLANCE, VS-PETS2003, [Online] 2003, pages 1-8, XP002461606 Retrieved from the Internet: URL:http://citeseer.ist.psu.edu/cache/pape rs/cs/31644/http:zSzzSzwww.ai.mit.eduzSzpe oplezSzstaufferzSzPaperszSzstaufferVSPETS2 003.pdf/stauffer03robust.pdf> [retrieved on 2007-12-06] | 1-5, 12-19, 26-33 | INV. G06K9/00 G06K9/42 |
| Y | * abstract *<br><br>* page 1, paragraph 1 *<br>* page 2, paragraph 3 - page 5, paragraph 4.4; figures 1-3 *<br>* page 7, right-hand column, line 1 - line 14; figures 6,7 *<br>----- | 6-11, 20-25, 34-36 | |
| X | GRAEFE V ET AL: "A novel approach for the detection of vehicles on freeways by real-time vision" INTELLIGENT VEHICLES SYMPOSIUM, 1996., PROCEEDINGS OF THE 1996 IEEE TOKYO, JAPAN 19-20 SEPT. 1996, NEW YORK, NY, USA,IEEE, US, 19 September 1996 (1996-09-19), pages 363-368, XP010209764 ISBN: 0-7803-3652-6 | 1-5, 12-19, 26-36 | TECHNICAL FIELDS SEARCHED (IPC) G06K B60R G05D B60W G08G |
| Y | * abstract *<br><br>* page 363, paragraph 1 - page 366, paragraph 3.2 *<br>-----<br><br>-/-- | 6-11, 20-25 | |

The present search report has been drawn up for all claims

| Place of search | Date of completion of the search | Examiner |
|---|---|---|
| Munich | 7 December 2007 | Zamuner, Umberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**European Patent Office**

## EUROPEAN SEARCH REPORT

Application Number

EP 07 01 5282

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOLDER U ET AL: "Visual detection of distant objects" INTELLIGENT ROBOTS AND SYSTEMS '93, IROS '93. PROCEEDINGS OF THE 1993 IEIEE/RSJ INTERNATIONAL CONFERENCE ON YOKOHAMA, JAPAN 26-30 JULY 1993, NEW YORK, NY, USA,IEEE, US, vol. 2, 26 July 1993 (1993-07-26), pages 1042-1049, XP010219362 ISBN: 0-7803-0823-9 | 1-5, 12-14, 16,18, 19,26-33 | |
| Y | * page 1043, paragraph 2 - page 1045 * <br><br> * page 1045, paragraph 3.2 - page 1046, paragraph 3.3 * <br> * page 1048, paragraph 5 * <br> ----- | 6-11, 20-25, 34-36 | |
| Y | FRANKE U ET AL: "Real-time stereo vision for urban traffic scene understanding" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3 October 2000 (2000-10-03), pages 273-278, XP010528949 ISBN: 0-7803-6363-9 * page 273, paragraph 1 * * page 276, paragraphs 4,4.1 - page 277 * * page 278, paragraph 4.3 * <br> ----- | 6-11, 20-25, 34-36 | TECHNICAL FIELDS SEARCHED (IPC) |

-/--

The present search report has been drawn up for all claims

| Place of search | Date of completion of the search | Examiner |
|---|---|---|
| Munich | 7 December 2007 | Zamuner, Umberto |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................
& : member of the same patent family, corresponding
   document

EPO FORM 1503 03.82 (P04C01)

**European Patent Office**

**EUROPEAN SEARCH REPORT**

Application Number

EP 07 01 5282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FARDI B ET AL: "Obstacle Detection and Pedestrian Recognition Using A 3D PMD Camera" INTELLIGENT VEHICLES SYMPOSIUM, 2006 IEEE MEGURO-KU, JAPAN 13-15 JUNE 2006, PISCATAWAY, NJ, USA,IEEE, 13 June 2006 (2006-06-13), pages 225-230, XP010937017 ISBN: 4-901122-86-X * page 227, paragraph III.B * * page 228, paragraph IV.A - page 229 * ----- | 6-11, 20-25, 34-36 | |

TECHNICAL FIELDS
SEARCHED     (IPC)

The present search report has been drawn up for all claims

| Place of search | Date of completion of the search | Examiner |
|---|---|---|
| Munich | 7 December 2007 | Zamuner, Umberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)